**Europäisches Patentamt**

**European Patent Office**

**Office européen des brevets**

(19)

(11) Veröffentlichungsnummer: **0 002 853**
**B1**

(12) # EUROPÄISCHE PATENTSCHRIFT

(45) Veröffentlichungstag der Patentschrift:
22.07.81

(51) Int. Cl.³: **B 60 T 13/38**

(21) Anmeldenummer: **78200355.2**

(22) Anmeldetag: **07.12.78**

(54) **Indirekt wirkende Druckluftbremsvorrichtung.**

(30) Priorität: **21.12.77 CH 15787/77**

(43) Veröffentlichungstag der Anmeldung:
**11.07.79 Patentblatt 79/14**

(45) Bekanntmachung des Hinweises auf die Patenterteilung:
**22.07.81 Patentblatt 81/29**

(84) Benannte Vertragsstaaten:
**BE DE FR IT NL SE**

(56) Entgegenhaltungen:
**DE-A-1 605 308**
**DE-A-2 433 327**
**DE-A-2 628 297**
**US-A-3 116 095**

(73) Patentinhaber: **Werkzeugmaschinenfabrik Oerlikon-Bührle AG, Birchstrasse 155, CH-8050 Zürich (CH)**

(72) Erfinder: **Müller, Walter, Rebenweg 10, CH-8303 Bassersdorf (CH)**

## Indirekt wirkende Druckluftbremsvorrichtung

Die Erfindung betrifft eine indirekt wirkende Druckluftbremsvorrichtung, insbesondere für Schienenfahrzeuge, mit einer Hauptluftleitung, einem daran angeschlossenen, indirekt wirkenden Steuerventil, einem an diesem angeschlossenen Bremszylinder und einem Federspeicherbremszylinder.

Es ist eine Vorrichtung dieser Art bekannt (US-A-2 531 055), bei der der Bremszylinder über ein indirekt wirkendes Steuerventil, der Federspeicherbremszylinder dagegen direkt an die Hauptluftleitung angeschlossen ist. Wird bei dieser Vorrichtung der Druck in der Hauptluftleitung, beispielsweise infolge Bruches derselben, auf Atmosphärendruck abgesenkt, so erzeugen beide Bremszylinder zusammen eine Bremskraft. Diese ist aber größer als die für das Bremsen ohne Gleiten der Räder notwendige Bremskraft.

Es ist eine andere, direkt wirkende Bremsvorrichtung bekannt (DE-B-1 605 308), bei welcher ein Überbremsen vermieden wird, indem dem Federspeicherbremszylinder ein Sperrventil vorgeschaltet ist, dessen beide Eingänge je mit einem vom Fahrzeugführer zu betätigenden Bremsventil verbunden sind. Bei dieser Bremsvorrichtung müssen Bremszylinder und Federspeicherbremszylinder je getrennt über das diesen zugeordnete Bremsventil betätigt werden. Fällt beispielsweise während einer Bremsung der Druck in der dem Bremszylinder zugeordneten Bremsleitung so stark, daß keine Bremsung mehr möglich ist, so wird über das andere Bremsventil nicht automatisch eine Bremsung mit dem Federspeicherbremszylinder eingeleitet. Dazu muß der Fahrzeugführer das andere Bremsventil betätigen. Diese Bremsvorrichtung weist dementsprechend zwei im wesentlichen voneinander getrennte Bremskreise auf und ist insbesondere für Kraftfahrzeuge geeignet.

Die Erfindung, wie sie in den Patentansprüchen gekennzeichnet ist, löst die Aufgabe, eine Bremsvorrichtung mit einem Bremszylinder und einem Federspeicherbremszylinder, wobei jeder für sich die volle Bremskraft zu erzeugen vermag, zu schaffen, bei welcher der Federspeicherbremszylinder automatisch dann eine Bremskraft erzeugt, wenn der Bremszylinder keine oder nur eine ungenügende Bremskraft erzeugen kann, dabei jedoch ein Überbremsen vermieden wird.

Dabei ist es ein Vorteil, daß der Federspeicherbremszylinder nicht nur vom Druck in der Hauptluftleitung, sondern automatisch auch vom Bremsdruck beaufschlagt wird, sofern dieser größer ist.

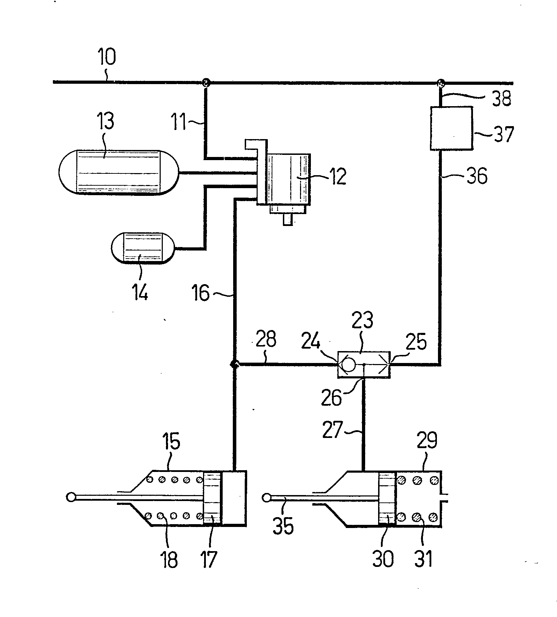

Ein Ausführungsbeispiel der erfindungsgemäßen Bremsvorrichtung ist im folgenden anhand der beigefügten Figur ausführlich beschrieben. Diese zeigt eine Druckluftbremse in schematischer Darstellung.

Gemäß Figur ist an eine Hauptluftleitung 10 über eine Zweigleitung 11 ein Steuerventil 12 angeschlossen. Die Hauptluftleitung 10 ist wiederum an ein hier nicht näher dargestelltes Führerbremsventil angeschlossen, das beispielsweise vom Fahrzeugführer betätigt werden kann. Das Steuerventil 12 ist in üblicher, hier nicht näher dargestellter Weise ausgebildet und weist einen Hilfsluftbehälter 13 und einen Steuerbehälter 14 auf. Ein Bremszylinder 15 ist über eine erste Bremsleitung 16 mit dem Steuerventil 12 verbunden. Im Bremszylinder 15 befindet sich ein Kolben 17, der durch eine Rückstellfeder 18 in seine Lösestellung verschiebbar ist. Der Kolben 17 ist in nicht dargestellter Weise mit einem Bremsgestänge verbunden, das Bremsklötze an die Lauffläche eines Fahrzeugrades anpreßt, wenn der Kolben 17 entgegen der Kraft der Rückstellfeder 18 gemäß Figur nach links verschoben wird.

Ein Doppelrückschlagventil 23 ist einerseits mit einem ersten Eingang 24 über eine Zweigleitung 28 an die Bremsleitung 16, und andererseits mit einem zweiten Eingang 25 an eine zweite Bremsleitung 36 angeschlossen. Diese ist an einen Druckübersetzer 37 angeschlossen, der seinerseits über eine Verbindungsleitung 38 an die Hauptluftleitung 10 angeschlossen ist. Der Ausgang 26 des Doppelrückschlagventils 23 ist über eine zweite Zweigleitung 27 an einen Federspeicherbremszylinder 29 angeschlossen. Im Federspeicherbremszylinder 29 befindet sich ein Kolben 30, der von einer starken Feder 31 belastet ist. Der Kolben 30 ist ebenfalls in nicht dargestellter Weise über eine Kolbenstange 35 mit dem Bremsgestänge verbunden.

Die Wirkungsweise der beschriebenen Druckluftbremse ist wie folgt:

Bei gelöster Bremse herrscht in der Hauptluftleitung 10 Betriebsdruck. Der Hilsluftbehälter 13 ist gefüllt und im Steuerbehälter 14 herrscht ebenfalls Betriebsdruck. Der Druck in der Hauptluftleitung 10 gelangt über den Druckübersetzer 37, die zweite Bremsleitung 36 und das Doppelrückschlagventil 23 in den Federspeicherbremszylinder 29. Dadurch wird der Kolben 30 nach rechts geschoben, die Feder 31 komprimiert und der Kolben 30 in Lösestellung gehalten. Die Bremsleitung 16 ist drucklos, wodurch die Rückstellfeder 18 in der Lage ist, den Kolben 17 in seine Lösestellung zu schieben.

Zum Bremsen wird der Druck in der Hauptluftleitung 10 gesenkt, wodurch in bekannter Weise Druckluft aus dem Hilfsluftbehälter 13 über das Steuerventil 12 und die Bremsleitung 16 in den Bremszylinder 15 gelangt und der Kolben 17 entgegen der Kraft der Feder 18 nach links geschoben und die Bremsklötze gegen die Lauffläche des Fahrzeugrades gepreßt werden. Der abgesenkte Druck in der Hauptluftleitung 10 kann nun je nach Bedarf bzw. Auslegung des Federspeicherbremszylinders 29 mehr oder weniger stark übersetzt werden. Je nach dem dieser übersetzte Druck in der Bremsleitung 36 größer oder kleiner ist als der Druck in der Bremsleitung 16, gelangt die Luft zum Spannen der Feder 31 des Federspeicherbremszylinders 29 über das Doppelrückschlagventil 23 aus der Bremsleitung 36 oder aus der Bremsleitung 16 auf die linke Seite des Kolbens 30.

In einer möglichen Auslegung der Bremseinrichtung übersteigt der Druck in der Bremsleitung 16 den Druck in der Bremsleitung 36 nur im Falle einer Vollbremsung. Dann wird durch das Doppelrückschlagventil 23 die Zweigleitung 27 bzw. der Ausgang 26 über den Eingang 24 und die Zweigleitung 28 mit der Bremsleitung 16 verbunden. Der Eingang 25 ist dabei geschlossen. Somit übt der Federspeicherbremszylinder 29 wiederum keine Bremskraft aus und ein Überbremsen ist ausgeschlossen.

Andere Auslegungen erlauben den Kolben 30 des Federspeicherbremszylinders 29 im Normalfall entweder immer durch den Druck aus der Bremsleitung 36 oder bei mehr oder weniger starker Teilbremsung auch vom Druck in der Bremsleitung 16 beaufschlagen zu lassen.

Vorzugsweise ist die Bremseinrichtung aber so auszulegen, daß mindestens bei Vollbremsung der Kolben 30 des Federspeicherbremszylinders 29 durch den Druck aus der Bremsleitung 16 beaufschlagt wird. Dann kann bei Versagen der Betriebsbremse, d. h. des Bremszylinders 15 der Bremsleitung 16, des Steuerventils 12, oder bei Luftmangel im Hilfsluftbehälter 13 oder im Steuerbehälter 14 der Federspeicherbremszylinder 29 die Bremsung einleiten. Wird in diesem Falle zum Bremsen der Druck in der Hauptluftleitung 10 abgesenkt, und es ergibt sich kein entsprechender Druckanstieg in der Bremsleitung 16, so kann spätestens bei Vollbremsung der Druck in der Bremsleitung 36 die Feder 31 des Federspeicherbremszylinders 29 nicht mehr komprimieren und die Federspeicherbremse wird angelegt.

Bei druckloser Hauptluftleitung 10 ist die Federspeicherbremse in jedem Falle angelegt.

Im allgemeinen ist der Bremszylinder 15 als Betriebsbremse vorgesehen und der Federspeicherbremszylinder dient als zweite Bremse, die zum Einsatz gelangt, wenn keine Druckluft vorhanden ist.

Oder ist beispielsweise der Druck im Hilfsluftbehälter 13 für eine Vollbremsung durch den Bremszylinder 15 nicht ausreichend, so reicht der Druck auch nicht mehr aus, um über das Doppelrückschlagventil 23 die Feder im Federspeicherbremszylinder 29 vollständig zu spannen, so daß der Kolben 30 ebenfalls auf das Gestänge wirkt. Zusammen bringen aber beide Zylinder immer genügend Kraft für eine Vollbremsung auf.

### Patentanspruch

Indirekt wirkende Druckluftbremsvorrichtung, insbesondere für Schienenfahrzeuge, mit einer Hauptluftleitung (10), einem daran angeschlossenen, indirekt wirkenden Steuerventil (12), einem an diesem angeschlossenen Bremszylinder (15) und einem Federspeicherbremszylinder (29), gekennzeichnet durch ein Doppelrückschlagventil (23), dessen erster Eingang (24) mit dem Steuerventil (12), dessen zweiter Eingang (25) über einen Druckübersetzer (37) mit der Hauptluftleitung (10) und dessen Ausgang (26) mit dem Federspeicherbremszylinder (29) verbunden ist.

### Claim

Indirectly acting compressed-air braking device, particularly for rail vehicles, with a main airline (10), an indirectly acting control valve (12) connected thereto, a brake cylinder (15) connected to the latter and a spring-loaded brake cylinder (29), characterised by a double non-return valve (23), the first inlet (24) of which is connected to the control valve (12), the second inlet (25) of which is connected to the main airline (10) via a pressure intensifier (37) and the outlet (26) of which is connected to the spring-loaded brake cylinder (29).

### Revendication

Installation de frein à air comprimé à effet indirect notamment pour véhicules ferroviaires, comportant une conduite principale d'air (10) à laquelle est raccordée une vanne de commande (12) à effet indirect, elle-même reliée à un cylindre de frein (15), ainsi qu'à un cylindre de frein à ressort accumulateur (29), installation caractérisée par une vanne d'arrêt double (23) dont la première entrée (24) est reliée à la vanne de commande (12), la seconde entrée (25) étant reliée à la conduite principale d'air (10) par un multiplicateur de pression (37), la sortie (26) étant reliée au cylindre de frein à ressort accumulateur (29).